# FASCICULE DE BREVET EUROPEEN

(11) **EP 3 225 547 B1**
(45) Date de publication et mention de la délivrance du brevet: **22.08.2018**
(21) Numéro de dépôt: 17158494.9
(22) Date de dépôt: 28.02.2017
(51) Int. Cl.: F16H 19/08, F16H 25/18

(54) **DISPOSITIF DE RAPPEL POUR RETRACTER UN DISPOSITIF D ACCROCHAGE MOBILE ET AERONEF EQUIPE D'UN TEL DISPOSITIF DE RAPPEL**
RÜCKHOLVORRICHTUNG ZUM ZURÜCKZIEHEN EINER MOBILEN EINRASTVORRICHTUNG, UND LUFTFAHRZEUG, DAS MIT EINER SOLCHEN RÜCKHOLVORRICHTUNG AUSGESTATTET IST
A RETURN DEVICE FOR RETRACTING A MOVABLE ATTACHMENT DEVICE, AND AN AIRCRAFT FITTED WITH SUCH A RETURN DEVICE

(30) Priorité: 30.03.2016 FR 1600527
(43) Date de publication de la demande: 04.10.2017
(73) Titulaire: Airbus Helicopters, 13725 Marignane Cedex (FR)
(72) Inventeur: MONS, Pierre, 31300 TOULOUSE (FR); JIMENEZ, Florian, 13100 AIX EN PROVENCE (FR)
(74) Mandataire: GPI & Associés

(56) Documents cités:
- FR-A1- 3 008 385
- US-A- 3 265 336

## Description

La présente invention concerne un dispositif de rappel pour rétracter un dispositif d'accrochage mobile permettant à un aéronef muni de ce dispositif d'accrochage de porter une charge externe.

Le domaine technique de l'invention est donc le domaine des systèmes permettant de fixer une charge externe à un aéronef, et notamment un aéronef muni d'une voilure tournante tel un giravion ou un hélicoptère.

Classiquement, un aéronef comporte une structure dite par commodité « structure porteuse » pour porter une charge externe indépendante de cet aéronef. La structure porteuse peut comprendre des cadres solidarisés au fuselage de cet aéronef, un revêtement, ou encore une ailette d'emport par exemple.

L'aéronef peut alors être pourvu d'un dispositif d'accrochage relié à la structure porteuse pour porter une charge externe. Généralement, un tel dispositif d'accrochage est donc attaché sous la structure porteuse de l'aéronef.

A titre d'exemple, le dispositif d'accrochage peut être muni d'un moyen d'accrochage de type crochet. Une élingue est alors attachée au crochet afin de permettre l'emport de charges externes.

Le dispositif d'accrochage peut aussi comprendre un dispositif de fixation pour suspendre le moyen d'accrochage à la structure porteuse. Ce dispositif de fixation peut être :
- un premier dispositif de fixation dénommé parfois « sling » en langue anglaise : ce premier dispositif est du type cardan en étant muni de deux axes de pivotement orthogonaux entre eux,
- un deuxième dispositif de fixation dénommé parfois « swing » en langue anglaise : ce deuxième dispositif comportant un châssis pyramidal suspendu à la structure porteuse par des câbles de suspension dénommés « pantoires » par exemple,
- un troisième dispositif de fixation mettant en oeuvre une poutre à laquelle est accroché le crochet, la poutre étant généralement fixée en au moins deux points à la structure porteuse.

Par exemple, le document US3044818 présente un dispositif de fixation comportant un châssis pyramidal. Ce châssis pyramidal peut comprendre une base possédant trois ou quatre côtés et des barres s'élevant de la base vers un sommet du châssis. Le moyen d'accrochage est situé sous une ouverture ménagée dans un fuselage.

Sur un aéronef comprenant un rotor de sustentation, le dispositif d'accrochage est favorablement agencé à proximité de l'axe rotor de ce rotor de sustentation afin de limiter les perturbations générées par ce dispositif d'accrochage sur le comportement en vol et donc le pilotage de l'aéronef. De la même manière, les réservoirs de carburant d'un aéronef peuvent aussi être agencés à proximité de cet axe rotor. Par conséquent, un dispositif d'accrochage peut être situé sous un réservoir d'aéronef durant un vol.

Dès lors, l'aéronef peut comporter un dispositif de rappel tendant à éloigner le dispositif d'accrochage des réservoirs en l'absence de charge externe, ou de tout autre organe à préserver. Ainsi, le dispositif de rappel tend à éviter le risque de perforation d'un organe sensible de l'aéronef par le dispositif d'accrochage lors d'un crash.

Un tel dispositif de rappel peut comprendre au moins un moyen de rappel élastique exerçant un effort de rappel pour éloigner le dispositif d'accrochage d'une zone sensible en l'absence de charge externe. Le moyen de rappel élastique peut être du type sandow et peut par exemple être relié au dispositif de fixation portant le moyen d'accrochage.

Lorsqu'un opérateur suspend une charge externe au dispositif d'accrochage, le moyen de rappel élastique tend alors à s'étirer. La charge externe tend ainsi à s'aligner verticalement sous l'effet de la pesanteur conjointement avec le dispositif d'accrochage, en étant positionnée dans une position dénommée par commodité « position de travail ».

Par contre, lorsque la charge externe est enlevée, le moyen de rappel élastique peut se rétracter pour éloigner le dispositif d'accrochage de la position de travail en positionnant le dispositif d'accrochage dans une position dite par commodité « position de stockage ». La position de stockage est choisie par exemple pour limiter les risques d'une perforation d'un réservoir de carburant par le dispositif d'accrochage en cas de crash de l'aéronef.

Le moyen de rappel élastique exerce un effort de rappel important sur le dispositif de fixation, pour le maintenir dans la position de stockage malgré les accélérations subies lors d'une mission de l'aéronef. Cet effort de rappel augmente de plus en fonction de l'étirement du moyen de rappel élastique, et donc de la charge externe portée ainsi que de la vitesse d'avancement et/ou de l'accélération de l'aéronef.

Dès lors, cet effort de rappel est important pour maintenir le dispositif d'accrochage dans la position de stockage. Cet effort de rappel est encore plus important en présence d'une charge, le moyen de rappel élastique étant alors agencé dans une position étirée. Dès lors, ce moyen de rappel élastique peut perturber l'équilibre de la charge externe portée dans la position de travail en générant un effort de rappel non négligeable.

De plus, lorsque la charge externe est libérée, cet effort de rappel entraîne un retour violent et rapide du dispositif d'accrochage dans la position de stockage. Des butées peuvent être installées pour éviter un impact avec la structure porteuse. Cependant, le rappel répété et violent du dispositif de fixation peut éventuellement fragiliser de telles butées. D'autre part, l'effort de rappel étant important, le dispositif d'accrochage subit une accélération également importante et se voit rappelé jusqu'à atteindre sa position de stockage avec une vitesse élevée. Ce processus impose au système de butées d'être capable d'absorber l'énergie correspondant à cette vitesse d'impact élevée.

En outre, un opérateur doit exercer un effort de traction important sur le dispositif d' accrochage pour fixer convenablement une charge externe afin de lutter contre l'effort de rappel exercé par le moyen de rappel élastique. Plus l'opérateur éloigne le dispositif d'accrochage de sa position de stockage, plus l'effort à fournir par l'opérateur est important.

Pour remédier à ces inconvénients, des moyens de rappel élastique s'étendant sur une grande longueur peuvent être utilisés afin de maximiser leur allongement admissible dans leur domaine élastique.

Des dispositifs d'accrochage peuvent comprendre des amortisseurs, des moyens de blocage ou encore des dispositifs s'activant en fonction de la position du dispositif de fixation.

Le document US 3 044 818 présente un dispositif d'accrochage muni d'un dispositif de fixation ayant un châssis pyramidal. Ce châssis pyramidal peut comprendre une base possédant trois ou quatre côtés et des barres s'élevant de la base vers un sommet du châssis. Le moyen d'accrochage est situé sous une ouverture ménagée dans un fuselage.

Le document US 3 265 336 décrit quant à lui un dispositif d'accrochage formant une structure souple pyramidale comprenant un câble et une pluralité de poulies. Un tel dispositif d'accrochage est cependant constamment agencé en dessous du fuselage d'un aéronef et ne peut être rétracté.

Le document FR 3 008 385, qui représente l'art antérieur le plus proche, décrit un aéronef équipé d'un dispositif d'accrochage et d'un dispositif de rappel pour rétracter le dispositif d'accrochage. Ce dispositif d'accrochage comporte un organe d'accrochage apte à porter une charge. Le dispositif de rappel comporte quant à lui un moyen de rappel élastique et un organe de démultiplication muni d'une pluralité de barres articulées deux à deux entre elles pour former des bras de levier et appliquer un effort non linéaire sur le dispositif d'accrochage. De plus, le dispositif de rappel inclut un lien reliant l'organe de démultiplication au dispositif d'accrochage et le moyen de rappel élastique est formé par un ressort fixé à une de ses extrémités à une barre de l'organe de démultiplication et en étant relié à un aéronef au niveau d'une autre extrémité.

Dans la position de stockage, l'organe de démultiplication est déplié en formant un angle (200) maximal entre les différents bras de levier. De cette manière, l'organe de démultiplication permet d'exercer un effort important sur le lien et donc sur le dispositif d'accrochage.

Par contre, dans la position de travail, l'organe de démultiplication est replié sur lui-même en formant un angle (200) minimal entre les différents bras de levier. Ainsi, l'organe de démultiplication permet d'exercer un effort réduit sur le lien et donc sur le dispositif d'accrochage.

Par conséquent, le dispositif de rappel exerce un effort sur le dispositif d'accrochage qui est maximal lorsque l'organe de démultiplication est déplié. Cet effort permet de maintenir le dispositif d'accrochage dans la position rétractée de stockage malgré les fortes accélérations pouvant être générées lors d'un vol de l'aéronef.

A l'inverse, le dispositif de rappel exerce un effort sur le dispositif d'accrochage qui est réduit lorsque l'organe de démultiplication est replié. Dès lors, le dispositif de rappel a un effet limité sur le dispositif d'accrochage dans une position déployée de travail.

Par ailleurs, l'évolution de l'effort de rappel d'une position rétractée de stockage du dispositif d'accrochage vers une position de travail n'évolue pas linéairement. Au contraire, cet effort de rappel diminue très rapidement de la position rétractée de stockage vers une valeur minimale. Dès lors, l'effort à fournir par un opérateur pour contrer cet effort de rappel lors de la manipulation du dispositif d'accrochage est surtout significatif lorsque le dispositif d'accrochage se trouve dans la position rétractée de stockage.

Enfin, l'organe de démultiplication induit une vitesse réduite de rétractation pour le déplacement du dispositif d'accrochage depuis la position déployée de travail vers la position rétractée de stockage.

La présente invention a alors pour objet un dispositif de rappel pour rétracter un dispositif d'accrochage d'un aéronef, un tel dispositif d'accrochage étant mobile entre une position rétractée de stockage POS1 et une position déployée de travail POS2. Un tel dispositif de rappel tend à placer le dispositif d'accrochage dans la position rétractée de stockage POS1 en l'absence d'une charge externe tout en autorisant le déplacement du dispositif d'accrochage vers la position déployée de travail POS2 en présence d'une charge externe.

En outre, un tel dispositif de rappel comporte :
- un moyen de rappel élastique pour exercer un effort de rappel en traction sur le dispositif d'accrochage et ramener automatiquement le dispositif d'accrochage dans la position rétractée de stockage POS1,
- un organe de démultiplication de l'effort de rappel en traction exercé par le moyen de rappel élastique sur le dispositif d'accrochage,
- un élément longiligne comportant une première extrémité libre solidarisée au dispositif d'accrochage et une seconde extrémité libre solidarisée à l'organe de démultiplication.

Autrement dit, un tel organe de démultiplication permet de limiter la taille et/ou la raideur du moyen de rappel élastique tout en permettant un rappel rapide du dispositif d'accrochage en position rétractée de stockage mais également un maintien dans cette position rétractée de stockage de ce dispositif d'accrochage lors des accélérations générées en vol en fonction des trajectoires suivies par l'aéronef.

Le moyen de rappel élastique peut quant à lui être avantageusement formé par un ressort hélicoïdal sollicité en traction. En outre, l'effort de traction fournit par un tel moyen de rappel élastique augmente lorsque le dispositif d'accrochage est écarté de sa position rétractée de stockage.

Par ailleurs, l'élément longiligne consiste par exemple en un câble d'acier inoxydable et peut comporter un diamètre inférieur à 10 millimètres et préférentiellement inférieur à 5 millimètres.

Selon l'invention, l'organe de démultiplication est remarquable en ce qu'il comporte une moufle fixe par rapport à un châssis du dispositif de rappel et une moufle mobile par rapport à ce châssis du dispositif de rappel, les moufles fixe et mobile comportant chacune au moins deux poulies indépendantes comportant chacune un degré de liberté en rotation, les au moins deux poulies de la moufle fixe étant libres en rotation autour d'un premier axe de rotation et les au moins deux poulies de la moufle mobile étant libres en rotation autour d'un deuxième axe de rotation, les premier et deuxième axes de rotation étant parallèles entre eux, les au moins deux poulies de la moufle fixe et les au moins deux poulies de la moufle mobile permettant d'enrouler l'élément longiligne sur ces au moins quatre poulies en effectuant au moins deux allers et deux retours entre les moufles fixe et mobile.

En d'autres termes, l'organe de démultiplication fonctionne selon le principe d'un palan dans lequel l'effort de rappel en traction exercé par le moyen de rappel élastique est transmis à la moufle mobile et divisé par le nombre d'allers et de retours de l'élément longiligne entre les moufles fixe et mobile.

De cette manière, l'organe de démultiplication permet d'utiliser un moyen de rappel élastique d'encombrement et de masse limités. Un tel moyen de rappel élastique peut donc générer une course de rappel relativement réduite qui est augmentée ensuite par l'organe de démultiplication afin de s'opposer notamment aux accélérations de l'aéronef.

En pratique, la seconde extrémité libre de l'élément longiligne peut être solidarisée avec la moufle mobile.

Dans ce cas, l'élément longiligne rentre dans l'organe de démultiplication au niveau de la moufle fixe puis il décrit alors trois allers et deux retours entre la moufle fixe et la moufle mobile. L'élément longiligne vient se solidariser ensuite au niveau de sa seconde extrémité libre avec la moufle mobile.

Par ailleurs, la moufle mobile peut être libre de se déplacer suivant différents degrés de liberté par rapport au châssis du dispositif de rappel. Une telle moufle mobile peut alors décrire différents mouvements ou trajectoires qui sont directement associés aux mouvements du deuxième axe de rotation des poulies de la moufle mobile, le deuxième axe de rotation étant éloigné ou rapproché du premier axe de rotation des poulies de la moufle fixe lors du déplacement du dispositif d'accrochage entre la position rétractée de stockage et la position déployée de travail. Par suite pour plus de clarté, les mouvements décrits par la moufle mobile par rapport au châssis du dispositif de rappel peuvent être définis par les mouvements du deuxième axe de rotation des poulies de cette moufle mobile par rapport au châssis du dispositif de rappel.

Ainsi selon un premier exemple de réalisation, le deuxième axe de rotation de la moufle mobile peut être apte à pivoter par rapport au châssis du dispositif de rappel, la moufle mobile formant un levier pivotant par rapport au châssis du dispositif de rappel autour d'un troisième axe de rotation, un tel troisième axe de rotation étant agencé parallèlement aux premier et deuxième axes de rotation respectivement des moufles fixe et mobile.

Dans ce cas, la moufle mobile possède un degré de liberté en rotation par rapport au châssis du dispositif de rappel, ce mouvement de rotation s'effectuant autour du troisième axe de rotation. Les poulies positionnées sur cette moufle mobile décrivent alors une trajectoire en arc de cercle lors du déplacement du dispositif d'accrochage entre la position rétractée de stockage et la position déployée de travail.

Selon un second exemple de réalisation, le deuxième axe de rotation de la moufle mobile peut être apte à coulisser par rapport au châssis du dispositif de rappel selon une direction de coulissement perpendiculaire aux premier et deuxième axes de rotation respectivement des moufles fixe et mobile.

Dans cet autre cas, la moufle mobile possède un degré de liberté en translation par rapport au châssis du dispositif de rappel, ce mouvement de translation s'effectuant suivant la direction de coulissement. Les poulies positionnées sur cette moufle mobile décrivent alors une trajectoire rectiligne lors du déplacement du dispositif d'accrochage entre la position rétractée de stockage et la position déployée de travail.

Avantageusement, l'organe de démultiplication peut comporter un rapport de démultiplication compris entre 2 et 10.

De cette manière, l'effort de traction transmis au dispositif d'accrochage pour le rétracter est 2 à 10 fois inférieur à l'effort de traction fourni par le moyen de rappel élastique. Un tel rapport de démultiplication permet ainsi de réduire l'encombrement et la masse du moyen de rappel élastique.

En pratique, le dispositif de rappel peut comporter au moins une poulie de renvoi et un lien pour permettre au moyen de rappel élastique de se déformer en allongement suivant une direction dont une projection orthogonale sur un plan médian de symétrie de l'aéronef est orientée dans un sens opposé à une projection orthogonale d'une direction de déplacement correspondante de la moufle mobile par rapport au châssis du dispositif de rappel.

Un tel agencement permet ainsi de limiter l'encombrement du dispositif de rappel suivant une direction longitudinale de l'aéronef correspondant à la direction de déplacement longitudinale du dispositif d'accrochage.

Une extrémité libre du moyen de rappel élastique est alors solidarisée au lien passant par la (ou les) poulie(s) de renvoi avant d'être solidarisée avec la moufle mobile. Le lien et la (ou les) poulie(s) de renvoi permettent donc de décaler la direction de la sollicitation en traction du moyen de rappel élastique au niveau, ou en amont, de l'organe de démultiplication suivant la direction longitudinale de l'aéronef orientée dans le sens allant d'une zone avant de l'aéronef vers une zone arrière de l'aéronef.

Par ailleurs, le dispositif de rappel peut comporter des moyens de verrouillage/déverrouillage de la moufle mobile, les moyens de verrouillage/déverrouillage permettant d'immobiliser automatiquement en position la moufle mobile dans une position de verrouillage correspondant à la position rétractée de stockage POS1 du dispositif d'accrochage.

Autrement dit, les moyens de verrouillage/déverrouillage permettent de maintenir en position de verrouillage la moufle mobile lorsqu'aucune charge externe n'est accrochée au dispositif d'accrochage. Les moyens de verrouillage/déverrouillage sont alors adaptés pour détecter la présence d'une charge externe sur le dispositif d'accrochage et libérer alors la moufle mobile automatiquement.

Avantageusement, les moyens de verrouillage/déverrouillage peuvent comporter :
- un galet monté sur un doigt basculant, le galet étant agencé en liaison pivot par rapport au doigt basculant et le doigt basculant étant agencé en liaison pivot par rapport à la moufle mobile,
- un élément de rappel élastique pour exercer un effort de rappel en torsion sur le doigt basculant et ramener automatiquement le doigt basculant dans une position médiane de repos lorsque la moufle mobile est agencée en position de verrouillage,
- une rampe de roulement sur laquelle le galet roule lors du déplacement de la moufle mobile par rapport au châssis du dispositif de rappel, la rampe de roulement étant solidarisée en liaison de type encastrement avec le châssis du dispositif de rappel et permettant de générer une force de réaction s'exerçant sur le doigt basculant, la force de réaction s'opposant à l'effort de rappel en torsion exercé par l'élément de rappel élastique sur le doigt basculant.

En d'autres termes, les moyens de verrouillage/déverrouillage permettent également d'amortir ou de freiner le mouvement de la moufle mobile lors de son mouvement de rétraction depuis une position de travail vers sa position de verrouillage. Par ailleurs, c'est par la sollicitation en torsion selon un premier sens de torsion de l'élément de rappel élastique que le mouvement de la moufle mobile est amorti/freiné lors de la rétraction du moyen de rappel élastique.

En effet, plus la moufle mobile se rapproche de sa position de verrouillage, plus le galet monte sur la rampe de roulement en entrainant en rotation le doigt basculant par rapport à la moufle mobile. Ainsi, la sollicitation en torsion de l'élément de rappel élastique augmente ce qui a pour effet d'augmenter la force de réaction de la rampe de roulement sur le galet et donc la force d'amortissement ou de freinage du châssis sur la moufle mobile.

En outre, les moyens de verrouillage/déverrouillage peuvent libérer la moufle mobile de sa position de verrouillage lorsqu'une force de traction supérieure à une valeur de seuil F1 est exercée sur l'élément longiligne.

Autrement dit, dès que la force de traction exercée sur l'élément longiligne est supérieure à la valeur de seuil F1, les moyens de verrouillage/déverrouillage permettent à la moufle mobile de sortir automatiquement de sa position de verrouillage. La force de traction exercée sur l'élément longiligne est alors supérieure à la force de traction exercée par le moyen de rappel élastique démultipliée par l'organe de démultiplication.

En outre, lorsque la pente de la rampe de roulement est constante la force de réaction exercée par cette rampe de roulement sur le galet et donc sur le doigt basculant peut être linéaire.

Cependant en pratique, la rampe de roulement peut comporter un degré d'inclinaison variable permettant de générer une force de réaction non linéaire exercée par la rampe de roulement sur le doigt basculant.

Cette non linéarité permet alors par exemple d'augmenter la force de freinage/amortissement quand la moufle mobile se rapproche de sa position de verrouillage. Par suite, la vitesse de déplacement de la moufle mobile peut être importante en début de course et diminuer progressivement jusqu'à s'annuler au niveau de la position de verrouillage.

Avantageusement, la rampe de roulement peut comporter un point d'inflexion permettant de générer localement un maximum pour la force de réaction exercée par la rampe de roulement sur le doigt basculant.

Au niveau d'un tel point d'inflexion, la pente de la rampe de roulement varie de façon brutale. Avantageusement, le sens de la pente peut ainsi s'inverser au niveau du point d'inflexion et permettre au doigt basculant de tourner sur lui-même pour venir se positionner dans une position médiane lorsque la moufle mobile est agencée en position de verrouillage.

Pour sortir la moufle mobile de sa position de verrouillage, le doigt basculant doit alors être basculé dans un sens opposé à celui dans lequel il se déplace en rotation lors du freinage/amortissement de la moufle mobile. L'élément de rappel en torsion est alors sollicité en torsion dans un sens opposé à celui dans lequel il est sollicité lors du freinage/amortissement de la moufle mobile.

La présente invention a aussi pour objet un aéronef muni d'un dispositif d'accrochage permettant à cet aéronef de réaliser le transport d'une charge externe. Un tel dispositif d'accrochage est mobile entre une position rétractée de stockage POS1 et une position déployée de travail POS2.

Selon l'invention un tel aéronef est remarquable en ce qu'il comporte un dispositif de rappel tel que précédemment décrit pour rétracter le dispositif d'accrochage en position rétractée de stockage POS1 en l'absence d'une charge externe tout en autorisant le déplacement du dispositif d'accrochage vers la position déployée de travail POS2 en présence d'une charge externe.

Autrement dit, lorsque l'aéronef est par exemple un giravion, celui-ci comporte un dispositif de rappel pour rétracter en position rétractée de stockage POS1 un dispositif d'accrochage si le giravion n'emmène aucune charge externe. Un tel giravion permet cependant également au dispositif d'accrochage de venir automatiquement, sous l'action d'une charge externe, en position déployée de travail POS2 agencée par exemple sensiblement à l'aplomb de l'axe de rotation d'un rotor principal du giravion.

L'invention et ses avantages apparaîtront avec plus de détails dans le cadre de la description qui suit avec des exemples donnés à titre illustratif en référence aux figures annexées qui représentent :
- les figures 1 et 2, des vues de côté détaillant les positions extrémales d'un dispositif d'accrochage d'aéronef,
- la figure 3, une vue en perspective des parties internes selon un premier exemple de réalisation d'un dispositif de rappel pour rétracter le dispositif d'accrochage, conformément à l'invention,
- les figures 4 et 5, des vues de dessous détaillant les positions extrémales des parties internes du premier exemple de réalisation de dispositif rappel,
- la figure 6, une vue en perspective des parties internes du premier exemple de réalisation d'un dispositif de rappel équipé également de moyens de verrouillage/déverrouillage, conformément à l'invention, et
- la figure 7, une vue de dessous des parties internes selon un second exemple de réalisation d'un dispositif de rappel pour rétracter le dispositif d'accrochage, conformément à l'invention.

Les éléments présents dans plusieurs figures distinctes sont affectés d'une seule et même référence.

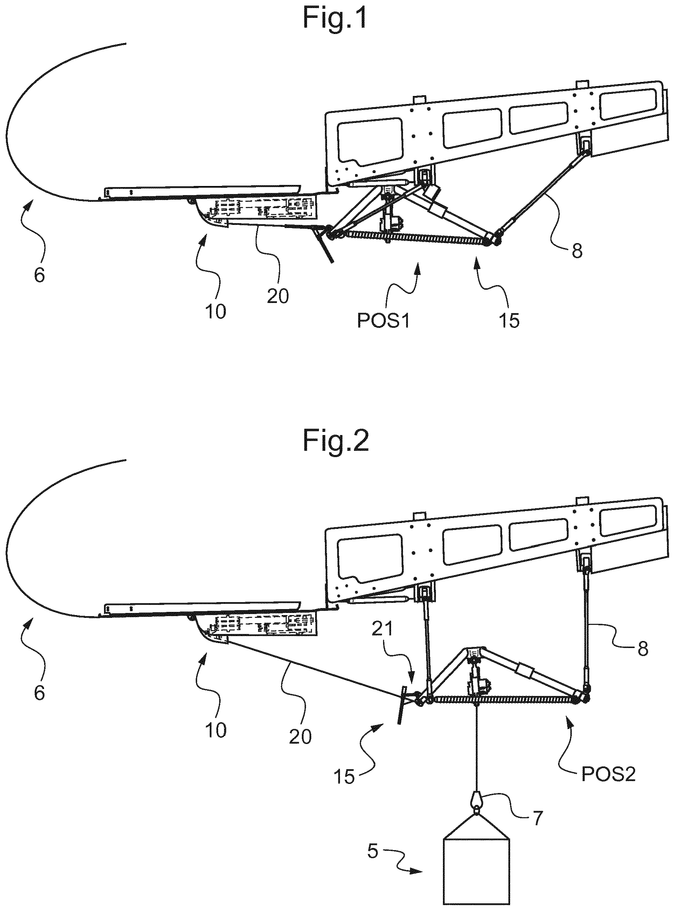

Comme déjà évoqué, l'invention se rapporte à un aéronef équipé d'un dispositif de rappel pour rétracter un dispositif d'accrochage. Tel que représenté aux figures 1 et 2, un tel aéronef 6 peut par exemple être un giravion.

Le dispositif de rappel 10 permet alors de rétracter automatique en position rétractée de stockage POS1 un dispositif d'accrochage 15 lorsqu'aucune charge 5 externe n'est fixée sur le dispositif d'accrochage 15.

En revanche, lorsqu'une charge 5 externe est solidarisée avec un organe d'accrochage 7 tel un crochet ou un mousqueton, le dispositif d'accrochage 15 peut se déployer et venir dans une position déployée de travail POS2. Une telle rétraction permet ainsi d'escamoter le dispositif d'accrochage 15 dans une zone éloignée d'un organe sensible pour la sécurité de l'aéronef 6, tel que par exemple un réservoir de carburant. Ainsi dans la position rétractée de repos POS1, la forme pyramidale du châssis du dispositif d'accrochage 15 ne présente pas un risque de perforation pour le réservoir de carburant.

Le dispositif de rappel 10 comporte un élément longiligne 20 dont une première extrémité libre 21 est solidarisée avec le dispositif d'accrochage 15. Un tel dispositif d'accrochage est généralement suspendu par des pantoires 8 sous la structure porteuse de l'aéronef 6.

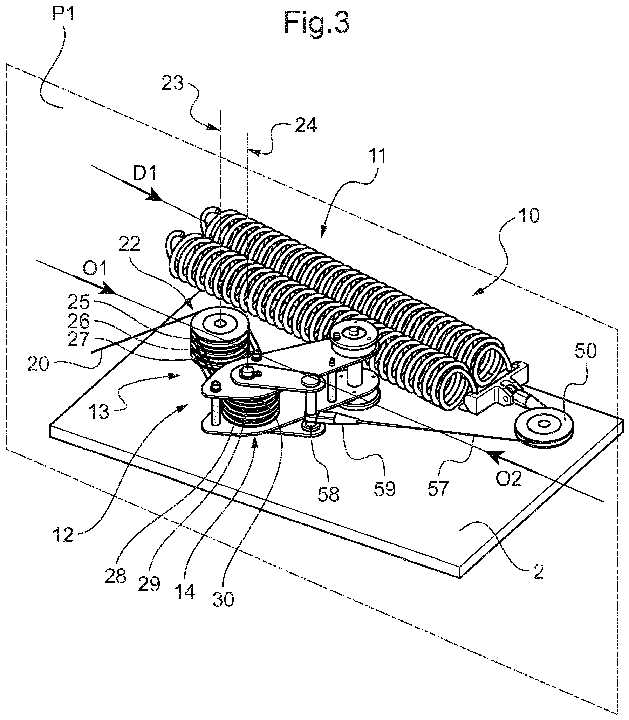

Tel que représenté à la figure 3, le dispositif de rappel 10 comporte ainsi un moyen de rappel élastique 11 ici représenté sous la forme de deux ressorts hélicoïdaux agencés en parallèles pour exercer un effort de rappel en traction sur le dispositif d'accrochage 15. Bien entendu, un unique ressort hélicoïdal peut également réaliser cette fonction.

Le dispositif de rappel 10 comporte également un organe de démultiplication 12 permettant de démultiplier la force générée par le moyen de rappel élastique 11. Un tel moyen de démultiplication 12 permet ainsi de limiter l'encombrement et la masse de l'organe de rappel élastique 11.

Comme déjà indiqué, le dispositif de rappel 10 comporte l'élément longiligne 20 dont la seconde extrémité libre 22 est solidarisée avec l'organe de démultiplication 12.

Un tel organe de démultiplication 12 comporte quant à lui une moufle fixe 13 et une moufle mobile 14 par rapport à un châssis 2 du dispositif de rappel 10. Ces moufles fixe 13 et mobile 14 sont des pièces formant chacune une interface pour démultiplier un effort de traction sur l'élément longiligne 20. De telles moufles permettent alors de loger chacune au moins deux poulies 25-27 et 28-30 libres selon un degré de liberté en rotation autour respectivement d'un premier axe de rotation 23 et d'un deuxième axe de rotation 24. L'élément longiligne 20 décrit alors au moins deux allers et deux retours entre les au moins quatre poulies 25-30 de l'organe de démultiplication 12 dont le coefficient de démultiplication est directement fonction du nombre d'allers et de retours que décrit l'élément longilignes 20 entre les moufles fixe 13 et mobile 14.

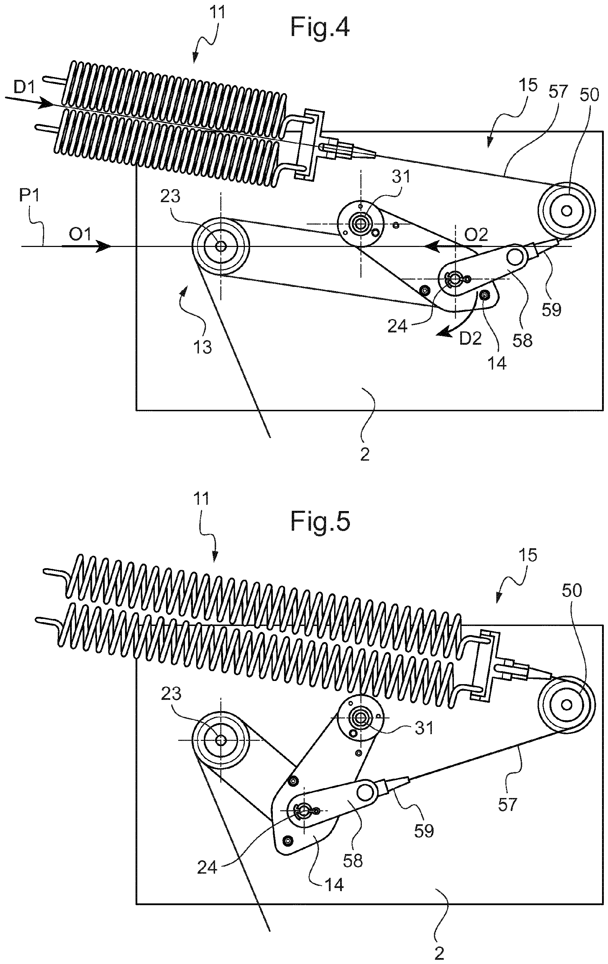

Ainsi, selon un premier exemple de réalisation tel que représenté aux figures 3 à 6, la moufle mobile 14 peut être formée par un levier pivotant autour d'un troisième axe de rotation 31. Les positions extrémales de la moufle mobile 14 sont représentées aux figures 4 et 5. La figure 4 monte ainsi la position extrémale de la moufle mobile 14 lorsque le dispositif d'accrochage 15 est agencé dans sa position rétractée de stockage POS1. La figure 5 illustre quant à elle la position extrémale de la moufle mobile 14 lorsque le dispositif d'accrochage 15 est agencé dans sa position déployée de travail POS2.

En outre, un tel dispositif de rappel 10 comporte une poulie de renvoi 50 et un lien 57 permettant d'inverser le sens de sollicitation en traction du moyen de rappel élastique 11 par rapport au sens de déplacement du dispositif d'accrochage 15. Une extrémité libre 59 du lien 57 est alors solidarisée avec la moufle mobile 14 via un bras rotatif 58 agencé en liaison pivot avec la moufle mobile 14 autour du deuxième axe de rotation 24.

Tel que représenté aux figures 3 et 4, un tel agencement permet alors d'orienter la direction d'allongement D1 du moyen de rappel élastique 11 telle que sa projection orthogonale 01 sur un plan médian de symétrie P1 de l'aéronef 6 soit de sens opposé à la projection orthogonale 02 de la direction de déplacement D2 de la moufle mobile 14 par rapport au châssis 2 du dispositif de rappel 10.

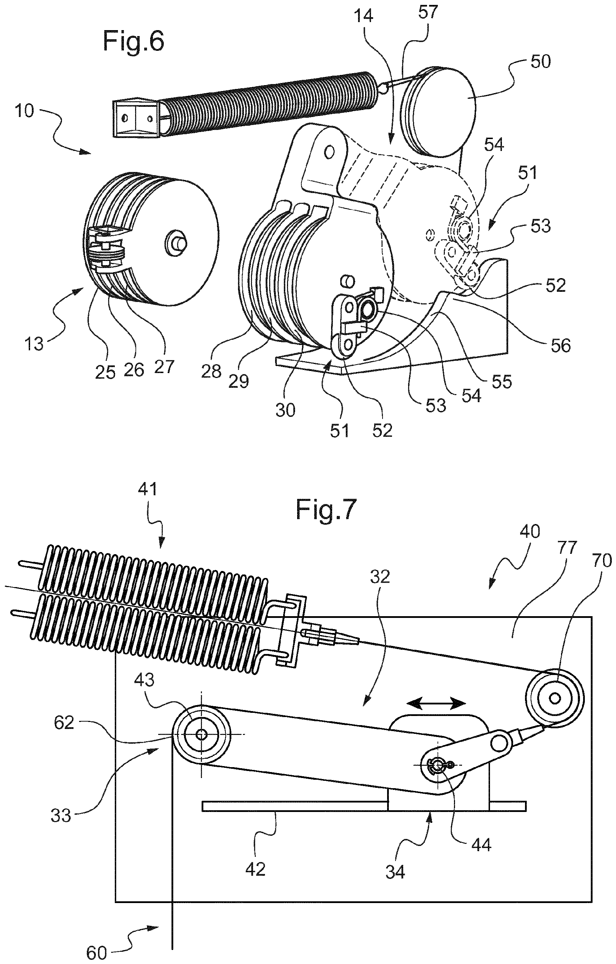

Tel que représenté à la figure 6, le dispositif de rappel 10 peut également comporter des moyens de verrouillage/déverrouillage 51 pour permettre de maintenir dans une position verrouillée la moufle mobile 14. Le déverrouillage de la moufle mobile 14 peut alors avantageusement s'effectuer automatiquement lorsque la force de traction sur l'élément longiligne 20 est supérieure à une valeur de seuil F1.

De plus, de tels moyens de verrouillage/déverrouillage 51 peuvent comporter :
- un galet 52 monté en liaison pivot sur un doigt basculant 53, un tel doigt basculant 53 étant quant à lui agencé en liaison pivot par rapport à la moufle mobile 14,
- un élément de rappel élastique 54 sollicité en torsion suivant deux sens de rotation en fonction du sens de déplacement de la moufle mobile 14, et
- une rampe de roulement 55 solidarisée avec le châssis 2 du dispositif de rappel 10 pour permettre de transmettre une force de réaction au galet 52 en s'opposant à l'effort de rappel en torsion transmis au doigt basculant 53 par l'élément de rappel élastique 54.

Ainsi, de tels moyens de verrouillage/déverrouillage 51 permettent également de réaliser un freinage ou un amortissement du déplacement en rotation de la moufle mobile 14 par rapport au châssis 2 du dispositif de rappel 10. Plus la moufle mobile 14 se rapproche de sa position de verrouillage et plus l'effort de freinage/amortissement peut être important provoquant une diminution de la vitesse en rotation jusqu'à l'annuler au niveau de la position de verrouillage.

Ainsi, la rampe de roulement 55 peut avantageusement comporter une pente dont l'angle d'inclinaison varie de façon non linéaire.

Au surplus, la rampe de roulement 55 peut comporter un point d'inflexion 56. De cette manière, la pente de la rampe de roulement 55 s'inverse et permet, lorsque la moufle mobile 14 est agencée en position de verrouillage, au doigt basculant 53 de venir dans une position médiane dans laquelle il n'est pas sollicité par l'élément de rappel élastique 54.

Par suite une fois le point d'inflexion 56 passé, la rampe de roulement 55 exerce alors une force de réaction sur le galet 52 qui est négligeable.

L'effort de traction sur l'élément longiligne 20 nécessaire pour sortir la moufle mobile 14 de sa position de verrouillage est alors fonction de la pente de la rampe de roulement 55 en direction du point d'inflexion 56 et de la raideur en torsion de l'élément de rappel élastique 54 préalablement choisi.

Par ailleurs selon un second exemple de réalisation tel que représenté à la figure 7, un dispositif de rappel 40 peut comporter une moufle mobile 34 agencée en liaison glissière par rapport au châssis 42 du dispositif de rappel 40. Dans ce cas, le deuxième axe de rotation 44 des au moins deux poulies 28-30 de la moufle mobile 34 est apte à coulisser de façon à réduire ou augmenter la distance entre le premier axe de rotation 43 des au moins deux poulies 25-27 de la moufle fixe 33 et le deuxième axe de rotation 44.

Comme précédemment, un tel dispositif de rappel 40 comporte donc un moyen de rappel élastique 41, un organe de démultiplication 32 et un élément longiligne 60 dont une seconde extrémité libre 62 est solidarisée à l'organe de démultiplication 32.

Ce dispositif de rappel 40 comporte également avantageusement une poulie de renvoi 70 et un lien 77 permettant d'opposer le sens de déformation du moyen de rappel élastique 41 avec le sens de déplacement longitudinal de la moufle mobile 34.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de rappel (10, 40) pour rétracter un dispositif d'accrochage (15) d'un aéronef (6), ledit dispositif d'accrochage (15) étant mobile entre une position rétractée de stockage (POS1) et une position déployée de travail (POS2), ledit dispositif de rappel (10, 40) tendant à placer ledit dispositif d'accrochage (15) dans ladite position rétractée de stockage (POS1) en l'absence d'une charge (5) externe tout en autorisant le déplacement du dispositif d'accrochage (15) vers ladite position déployée de travail (POS2) en présence d'une charge (5) externe, ledit dispositif de rappel (10, 40) comportant :
• un moyen de rappel élastique (11, 41) pour exercer un effort de rappel en traction sur ledit dispositif d'accrochage (15) et ramener automatiquement ledit dispositif d'accrochage (15) dans ladite position rétractée de stockage (POS1),
• un organe de démultiplication (12, 32) dudit effort de rappel en traction exercé par ledit moyen de rappel élastique (11, 41) sur ledit dispositif d'accrochage (15),
• un élément longiligne (20, 60) comportant une première extrémité libre (21) apte à être solidarisée audit dispositif d'accrochage (15) et une seconde extrémité libre (22, 62) solidarisée audit organe de démultiplication (12, 32),
**caractérisé en ce que** ledit organe de démultiplication (12, 32) comporte une moufle fixe (13, 33) par rapport à un châssis (2, 42) dudit dispositif de rappel (10, 40) et une moufle mobile (14) par rapport audit châssis (2, 42) dudit dispositif de rappel (10, 40), lesdites moufles fixe (13, 33) et mobile (14, 34) comportant chacune au moins deux poulies indépendantes comportant chacune un degré de liberté en rotation, lesdites au moins deux poulies (25-27) de ladite moufle fixe (13, 33) étant libres en rotation autour d'un premier axe de rotation (23, 43) et lesdites au moins deux poulies (28-30) de ladite moufle mobile (14, 34) étant libres en rotation autour d'un deuxième axe de rotation (24, 44), lesdits premier (23, 43) et deuxième (24, 44) axes de rotation étant parallèles entre eux, lesdites au moins deux poulies (25-27) de ladite moufle fixe (13, 33) et lesdites au moins deux poulies (28-30) de ladite moufle mobile (14, 34) permettant d'enrouler ledit élément longiligne (20, 60) sur lesdites au moins quatre poulies (25-30) en effectuant au moins deux allers et deux retours entre lesdites moufles fixe (13, 33) et mobile (14, 34).

2. Dispositif de rappel selon la revendication 1,
**caractérisé en ce que** ladite seconde extrémité libre (22, 62) dudit élément longiligne (20, 60) est solidarisée avec ladite moufle mobile (14, 34).

3. Dispositif de rappel selon l'une quelconque des revendications 1 à 2,
**caractérisé en ce que** ledit deuxième axe de rotation (24) de ladite moufle mobile (14) est apte à pivoter par rapport audit châssis (2) dudit dispositif de rappel (10), ladite moufle mobile (14) formant un levier pivotant par rapport audit châssis (2) dudit dispositif de rappel (10) autour d'un troisième axe de rotation (31), ledit troisième axe de rotation (31) étant agencé parallèlement par rapport audit premier axe de rotation (23) et audit deuxième axe de rotation (24) respectivement desdites moufles fixe (13) et mobile (14).

4. Dispositif de rappel selon l'une quelconque des revendications 1 à 2,
**caractérisé en ce que** ledit deuxième axe de rotation (44) de ladite moufle mobile (34) est apte à coulisser par rapport audit châssis (42) dudit dispositif de rappel (40) selon une direction de coulissement perpendiculaire audit premier axe de rotation (43) et audit deuxième axe de rotation (44) respectivement desdites moufles fixe (33) et mobile (34).

5. Dispositif de rappel selon l'une quelconque des revendications 1 à 4,
**caractérisé en ce que** ledit organe de démultiplication (12, 32) comporte un rapport de démultiplication compris entre 2 et 10.

6. Dispositif de rappel selon l'une quelconque des revendications 1 à 5,
**caractérisé en ce que** ledit dispositif de rappel (10) comporte au moins une poulie de renvoi (50, 70) et un lien (57, 77) pour permettre audit moyen de rappel élastique (11) de se déformer en allongement suivant une direction (D1) dont une projection orthogonale (01) sur un plan médian de symétrie (P1) de l'aéronef (6) est orientée dans un sens opposé à une projection orthogonale (02) sur ledit plan médian de symétrie (P1) d'une direction de déplacement (D2) correspondante de la moufle mobile (14) par rapport audit châssis (2) dudit dispositif de rappel (10).

7. Dispositif de rappel selon l'une quelconque des revendications 1 à 6,
**caractérisé en ce que** ledit dispositif de rappel (10) comporte des moyens de verrouillage/déverrouillage (51) de la moufle mobile (14), lesdits moyens de verrouillage/déverrouillage (51) permettant d'immobiliser automatiquement en position ladite moufle mobile (14) dans une position de verrouillage correspondant à ladite position rétractée de stockage (POS1) dudit dispositif d'accrochage (15).

8. Dispositif de rappel selon la revendication 7,
**caractérisé en ce que** lesdits moyens de verrouillage/déverrouillage (51) comportent :
• un galet (52) monté sur un doigt basculant (53), ledit galet (52) étant agencé en liaison pivot par rapport audit doigt basculant (53) et ledit doigt basculant (53) étant agencé en liaison pivot par rapport à ladite moufle mobile (14),
• un élément de rappel élastique (54) pour exercer un effort de rappel en torsion sur ledit doigt basculant (53) et ramener automatiquement ledit doigt basculant (53) dans une position médiane de repos lorsque ladite moufle mobile (14) est agencée en position de verrouillage,
• une rampe de roulement (55) sur laquelle ledit galet (52) roule lors du déplacement de ladite moufle mobile (14) par rapport au châssis (2) dudit dispositif de rappel (10), ladite rampe de roulement (55) étant solidarisée en liaison de type encastrement avec ledit châssis (2) dudit dispositif de rappel (10) et permettant de générer une force de réaction s'exerçant sur ledit doigt basculant (53), ladite force de réaction s'opposant audit effort de rappel en torsion exercé par ledit élément de rappel élastique (54) sur ledit doigt basculant (53).

9. Dispositif de rappel selon l'une quelconque des revendications 7 à 8,
**caractérisé en ce que** lesdits moyens de verrouillage/déverrouillage (51) libèrent ladite moufle mobile (14) de ladite position de verrouillage lorsqu'une force de traction supérieure à une valeur de seuil F1 est exercée sur ledit élément longiligne (20).

10. Dispositif de rappel selon l'une quelconque des revendications 8 à 9,
**caractérisé en ce que** ladite rampe de roulement (55) comporte un degré d'inclinaison variable permettant de générer une force de réaction non linéaire exercée par ladite rampe de roulement (55) sur ledit doigt basculant (53).

11. Dispositif de rappel selon l'une quelconque des revendications 8 à 10,
**caractérisé en ce que** ladite rampe de roulement (55) comporte un point d'inflexion (56) permettant de générer localement un maximum pour ladite force de réaction exercée par ladite rampe de roulement (55) sur ledit doigt basculant (53).

12. Aéronef (6) muni d'un dispositif d'accrochage (15) permettant audit aéronef (6) de réaliser le transport d'une charge (5) externe, ledit dispositif d'accrochage (15) étant mobile entre une position rétractée de stockage (POS1) et une position déployée de travail (POS2),
**caractérisé en ce que** ledit aéronef (6) comporte un dispositif de rappel (10, 40) selon l'une quelconque des revendications 1 à 11 pour rétracter ledit dispositif d'accrochage (15) en position rétractée de stockage (POS1) en l'absence d'une charge (5) externe tout en autorisant le déplacement du dispositif d'accrochage (15) vers ladite position déployée de travail (POS2) en présence d'une charge (5) externe.

## Patentansprüche

1. Rückholvorrichtung (10, 40) zum Zurückziehen einer Einrastvorrichtung (15) eines Luftfahrzeugs (6), wobei die Einrastvorrichtung (15) zwischen einer eingezogenen Lagerstellung (POS1) und einer ausgefahrenen Arbeitsstellung (POS2) beweglich ist, wobei die Rückholvorrichtung (10, 40) die Einrastvorrichtung (15) in die eingezogene Lagerstellung (POS1) bei Abwesenheit einer äußeren Last (5) zu platzieren sucht und die Bewegung der Einrastvorrichtung (15) in die ausgefahrene Arbeitsstellung (POS2) erlaubt, wenn eine äußere Last (5) vorhanden ist, wobei die Rückholvorrichtung (10, 40) aufweist:
• ein elastisches Rückholmittel (11, 41) zum Ausüben einer Zug-Rückholkraft auf die Einrastvorrichtung (15) und zum automatischen Zurückholen der Einrastvorrichtung (15) in die eingezogene Lagerstellung (POS1),
• ein Element (12, 32) zur Untersetzung der Zug-Rückholkraft, die von dem elastischen Rückholmittel (11, 41) auf die Einrastvorrichtung (15) ausgeübt wird,
• ein längliches Element (20, 60) mit einem ersten freien Ende (21), welches mit der Einrastvorrichtung (15) fest verbunden werden kann, und einem zweiten freien Ende (22, 62), das mit dem Untersetzungselement (12, 32) fest verbunden ist,
**dadurch gekennzeichnet, dass** das Untersetzungselement (12, 32) ein Seilscheibenlager (13, 33) aufweist, welches relativ zu einem Gehäuse (2, 42) der Rückholvorrichtung (10, 40) unbeweglich ist, und ein Seilscheibenlager (14), welches relativ zu dem Gehäuse (2, 42) der Rückholvorrichtung (10, 40) beweglich ist, wobei das unbewegliche Seilscheibenlager (13, 33) und das bewegliche Seilscheibenlager (14, 34) jeweils mindestens zwei voneinander unabhängige Seilscheiben aufweisen, die jeweils einen Rotationsfreiheitsgrad aufweisen, wobei die mindestens zwei Seilscheiben (25-27) des unbeweglichen Seilscheibenlagers (13, 33) um eine erste Rotationsachse (23, 43) frei drehbar sind, und die mindestens zwei Seilscheiben (28-30) des beweglichen Seilscheibenlagers (14, 34) um eine zweite Drehachse (24, 44) drehbar sind, wobei die erste (23 43) und die zweite (24, 44) Drehachse parallel zueinander sind, wobei die mindestens zwei Seilscheiben (25-27) des unbeweglichen Seilscheibenlagers (13, 33) und die mindestens zwei Seilscheiben (28-30) des beweglichen Seilscheibenlagers (14, 34) es erlauben, das längliche Element (20, 60) auf den mindestens vier Seilscheiben (25-30) aufzurollen, indem das längliche Element (20, 60) mindestens zweimal in Vorwärtsrichtung und zweimal in Rückwärtsrichtung zwischen dem unbeweglichen Seilscheibenlager (13, 33) und dem beweglichen Seilscheibenlager (14, 34) verläuft.

2. Rückholvorrichtung nach Anspruch 1,
**dadurch gekennzeichnet, dass** das zweite freie Ende (22, 62) des länglichen Elements (20, 60) mit dem beweglichen Seilscheibenlager (14, 34) fest verbunden ist.

3. Rückholvorrichtung nach einem der Ansprüche 1 bis 2,
**dadurch gekennzeichnet, dass** die zweite Drehachse (24) des beweglichen Seilscheibenlagers (14) relativ zu dem Gehäuse (2) der Rückholvorrichtung (10) verschwenkbar ist, wobei das bewegliche Seilscheibenlager (14) einen Schwenkhebel relativ zu dem Gehäuse (2) der Rückholvorrichtung (10), der um eine dritte Drehachse (31) verschwenkbar ist, bildet, wobei die dritte Drehachse (31) parallel zu der ersten Drehachse (23) und der zweiten Drehachse (24) des unbeweglichen Seilscheibenlagers (13) und des beweglichen Seilscheibenlagers (14) angeordnet ist.

4. Rückholvorrichtung nach einem der Ansprüche 1 bis 2,
**dadurch gekennzeichnet, dass** die zweite Drehachse (44) des beweglichen Seilscheibenlagers (34) relativ zu dem Gehäuse (42) der Rückholvorrichtung (40) in einer Gleitrichtung gleiten kann, die senkrecht zu der ersten Rotationsachse (42) und der zweiten Rotationsachse (44) des unbeweglichen Seilscheibenlagers (33) bzw. des beweglichen Seilscheibenlagers (34) verläuft.

5. Rückholvorrichtung nach einem der Ansprüche 1 bis 4,
**dadurch gekennzeichnet, dass** das Untersetzungselement (12, 32) ein Untersetzungsverhältnis zwischen 2 und 10 aufweist.

6. Rückholvorrichtung nach einem der Ansprüche 1 bis 5,
**dadurch gekennzeichnet, dass** die Rückholvorrichtung (10) mindestens eine Rückführseilscheibe (50, 70) und einen Verbinder (57, 77) aufweist, um es dem elastischen Rückholmittel (11) zu erlauben, sich in einer Richtung (D1) zu dehnen, von der eine senkrechte Projektion (O1) auf eine Mittelsymmetrieebene (P1) des Luftfahrzeugs (6) in einer Richtung orientiert ist, die entgegengesetzt zu einer senkrechten Projektion (O2) auf die Mittelsymmetrieebene (P1) einer entsprechenden Bewegungsrichtung (D2) des beweglichen Seilscheibenlagers (14) relativ zu dem Gehäuse (2) der Rückholvorrichtung (10) verläuft.

7. Rückholvorrichtung nach einem der Ansprüche 1 bis 6,
**dadurch gekennzeichnet, dass** die Rückholvorrichtung (10) Mittel (51) zur Verriegelung/Entriegelung des beweglichen Seilscheibenlagers (14) aufweist, wobei die Mittel (51) zur Verriegelung/Entriegelung es erlauben, das bewegliche Seilscheibenlager (14) in einer Verriegelungsstellung automatisch zu arretieren, die der eingezogenen Lagerstellung (POS1) der Einrastvorrichtung (15) entspricht.

8. Rückholvorrichtung nach Anspruch 7,
**dadurch gekennzeichnet, dass** die Mittel (51) zur Verriegelung/Entriegelung aufweisen:
• eine Rolle (52), die auf einem verschwenkbaren Arm (53) montiert ist, wobei die Rolle (52) in Schwenkverbindung bezüglich des Schwenkarms (53) angeordnet ist, und der Schwenkarm (53) in Schwenkverbindung bezüglich des beweglichen Seilscheibenlagers (14) angeordnet ist,
• ein elastisches Rückholelement (54) zum Ausüben einer Torsionsrückholkraft auf den Schwenkarm (53) und um den Schwenkarm (53) automatisch in eine mittlere Ruhestellung zu schwenken, wenn das bewegliche Seilscheibenlagers (14) in der Verriegelungsstellung angeordnet ist,
• eine Rollrampe (55), auf der die Rolle (52) während der Bewegung des beweglichen Seilscheibenlagers (14) relativ zum Gehäuse (2) der Rückholvorrichtung (10) rollt, wobei die Rollrampe (55) durch Einbau mit dem Gehäuse (2) der Rückholvorrichtung (10) fest verbunden ist und es ermöglicht, eine Reaktionskraft zu erzeugen, die auf den Schwenkarm (53) wirkt, wobei die Reaktionskraft der Torsionsrückholkraft entgegenwirkt, die von dem elastischen Rückholelement (54) auf den Schwenkarm (53) ausgeübt wird.

9. Rückholvorrichtung nach einem der Ansprüche 7 bis 8,
**dadurch gekennzeichnet, dass** die Verriegelungs-/Entriegelungsmittel (51) das bewegliche Seilscheibenlager (14) aus der Verriegelungsstellung befreien, wenn eine Zugkraft, die größer als ein Schwellenwert F1 ist, auf das längliche Element (20) ausgeübt wird.

10. Rückholvorrichtung nach einem der Ansprüche 8 bis 9,
**dadurch gekennzeichnet, dass** die Rollrampe (55) einen variablen Neigungsgrad aufweist, der es erlaubt, eine nichtlineare Reaktionskraft zu erzeugen, die von der Rollrampe (55) auf den Schwenkarm (53) ausgeübt wird.

11. Rückholvorrichtung nach einem der Ansprüche 8 bis 10,
**dadurch gekennzeichnet, dass** die Rollrampe (55) einen Wendepunkt (56) aufweist, der es erlaubt, lokal ein Maximum der von der Rollrampe (55) ausgeübten Reaktionskraft auf den Schwenkarm (53) zu erzeugen.

12. Luftfahrzeug (6) mit einer Einrastvorrichtung (15), welche es dem Luftfahrzeug (6) ermöglicht, den Transport einer äußeren Last (5) durchzuführen, wobei die Einrastvorrichtung (15) zwischen einer eingezogenen Lagerstellung (POS1) und einer ausgefahrenen Arbeitsstellung (POS2) beweglich ist,
**dadurch gekennzeichnet, dass** das Luftfahrzeug (6) eine Rückholvorrichtung (10, 40) nach einem der Ansprüche 1 bis 11 aufweist, um die Einrastvorrichtung (15) in die zurückgezogene Lagerstellung (POS1) bei Abwesenheit einer äußeren Last (5) zurückzuziehen und die Bewegung der Einrastvorrichtung (15) in die ausgefahrene Arbeitsstellung (POS2) zu erlauben, wenn eine äußere Last (5) vorhanden ist.

## Claims

1. Return device (10, 40) for retracting an attachment device (15) of an aircraft (6), said attachment device (15) being movable between a retracted storage position (POS1) and an extended working position (POS2), said return device (10, 40) being intended for putting said attachment device (15) into said retraced storage position (POS1) in the absence of an external load (5) while allowing the attachment device (15) to be moved towards said extended working position (POS2) in the presence of an external load (5),
said return device (10, 40) comprising:
- a resilient return means (11, 41) for applying a traction return force to said attachment device (15) and for automatically moving said attachment device (15) back into said retracted storage position (POS1),
- a force-reduction member (12, 32) for reducing said traction return force applied to said attachment device (15) by said resilient return means (11, 41),
- an elongate element (20, 60) having a first free end (21) suitable for being rigidly connected to said attachment device (15) and a second free end (22, 62) which is rigidly connected to said force-reduction member (12, 32),
**characterised in that** said force-reduction member (12, 32) comprises a pulley block (13, 33) which is stationary relative to a frame (2, 42) of said return device (10, 40), and a pulley block (14) which is movable relative to said frame (2, 42) of said return device (10, 40), said stationary pulley block (13, 33) and movable pulley block (14, 34) each comprising at least two independent pulleys each having a degree of rotational freedom, said at least two pulleys (25-27) of said stationary pulley block (13, 33) being free to rotate about a first rotational axis (23, 43) and said at least two pulleys (28-30) of said movable pulley block (14, 34) being free to rotate about a second rotational axis (24, 44), said first rotational axis (23, 43) and second rotational axis (24, 44) being parallel to one another, said at least two pulleys (25-27) of said stationary pulley block (13, 33) and said at least two pulleys (28-30) of said movable pulley block (14, 34) allowing said elongate element (20, 60) to be wound on said at least four pulleys (25-30) so as to take at least two outward and two return paths between said stationary pulley block (13, 33) and movable pulley block (14, 34).

2. Return device according to claim 1,
**characterised in that** said second free end (22, 62) of said elongate element (20, 60) is rigidly connected to said movable pulley block (14, 34).

3. Return device according to either claim 1 or claim 2, **characterised in that** said second rotational axis (24) of said movable pulley block (14) is suitable for being pivoted relative to said frame (2) of said return device (10), said movable pulley block (14) forming a lever which pivots relative to said frame (2) of said return device (10) about a third rotational axis (31), said third rotational axis (31) being arranged in parallel with said first rotational axis (23) and said second rotational axis (24) of said stationary pulley block (13) and movable pulley block (14), respectively.

4. Return device according to either claim 1 or claim 2, **characterised in that** said second rotational axis (44) of said movable pulley block (34) is suitable for being slid relative to said frame (42) of said return device (40) in a sliding direction that is perpendicular to said first rotational axis (43) and said second rotational axis (44) of said stationary pulley block (33) and movable pulley block (34), respectively.

5. Return device according to any of claims 1 to 4, **characterised in that** said force-reduction member (12, 32) has a force reduction ratio of between 2 and 10.

6. Return device according to any of claims 1 to 5, **characterised in that** said return device (10) comprises at least one return pulley (50, 70) and a strap (57, 77) for allowing said resilient return means (11) to deform by elongation in a direction (D1) for which an orthogonal projection (O1) onto a midplane of symmetry (P1) of the aircraft (6) is oriented in a direction opposite an orthogonal projection (02) onto said midplane of symmetry (P1) of a corresponding movement direction (D2) of said movable pulley block (14) relative to said frame (2) of said return device (10).

7. Return device according to any of claims 1 to 6, **characterised in that** said return device (10) comprises locking/unlocking means (51) for the movable pulley block (14), said locking/unlocking means (51) allowing said movable pulley block (14) to be automatically held stationary in a locked position corresponding to said retracted storage position (POS1) of said attachment device (15).

8. Return device according to claim 7, **characterised in that** said locking/unlocking means (51) comprise:
- a wheel (52) mounted on a rocker finger (53), said wheel (52) being arranged so as to be pivotally connected relative to said rocker finger (53) and said rocker finger (53) being arranged so as to be pivotally connected relative to said movable pulley block (14),
- a resilient return element (54) for applying a torsional return force to said rocker finger (53) and for automatically moving said rocker finger (53) back into an intermediate rest position when said movable pulley block (14) is arranged in the locked position,
- a roller ramp (55) on which said wheel (52) rolls when said movable pulley block (14) is moved relative to the frame (2) of said return device (10), said roller ramp (55) being rigidly connected to said frame (2) of said return device (10) such that it fits therein and allowing a reaction force to be generated which is applied to said rocker finger (53), said reaction force acting against said torsional return force applied to said rocker finger (53) by said elastic return means (54).

9. Return device according to either claim 7 or claim 8, **characterised in that** said locking/unlocking means (51) release said movable pulley block (14) from said locked position when a traction force of greater than a threshold F1 is applied to said elongate element (20).

10. Return device according to either claim 8 or claim 9, **characterised in that** said roller ramp (55) has a variable degree of inclination which makes it possible to generate a non-linear reaction force which is applied to said rocker finger (53) by said roller ramp (55).

11. Return device according to any of claims 8 to 10, **characterised in that** said roller ramp (55) has a point of inflection (56) which makes it possible for a maximum to be locally generated for said reaction force which is applied to said rocker finger (53) by said roller ramp (55).

12. Aircraft (6) provided with an attachment device (15) which allows said aircraft (6) to transport an external load (5), said attachment device (15) being movable between a retracted storage position (POS1) and an extended working position (POS2), **characterised in that** said aircraft (6) comprises a return device (10, 40) according to any of claims 1 to 11 for retracting said attachment device (15) into the retracted storage position (POS1) in the absence of an external load (5) while allowing said attachment device (15) to be moved towards said extended working position (POS2) in the presence of an external load (5).
